(19) Europäisches Patentamt

European Patent Office

Office européen des brevets

(11) **EP 0 892 760 B1**

(12) **EUROPEAN PATENT SPECIFICATION**

(45) Date of publication and mention
of the grant of the patent:
**31.05.2000 Bulletin 2000/22**

(51) Int Cl.[7]: **C01B 3/38**, B01J 8/00,
B01J 8/02

(21) Application number: **97919332.3**

(22) Date of filing: **08.04.1997**

(86) International application number:
**PCT/EP97/01803**

(87) International publication number:
**WO 97/37929 (16.10.1997 Gazette 1997/44)**

(54) **EQUIPMENT FOR PARTIAL OXIDATION REACTIONS**

ANLAGE FÜR TEILOXIDATIONSREAKTIONEN

MATERIEL DESTINE A DES REACTIONS D'OXYDATION PARTIELLE

(84) Designated Contracting States:
**DE DK GB**

(30) Priority: **11.04.1996 IT MI960690**

(43) Date of publication of application:
**27.01.1999 Bulletin 1999/04**

(73) Proprietor: **SNAMPROGETTI S.p.A.**
**I-20097 San Donato Milanese (Milano) (IT)**

(72) Inventors:
• **BASINI, Luca**
**I-20129 Milano (IT)**
• **DONATI, Gianni**
**I-20017 Rho (IT)**

(74) Representative: **Appoloni, Romano et al**
**Ing. Barzanò & Zanardo S.p.A.**
**Via Borgonuovo 10**
**20121 Milano (IT)**

(56) References cited:
**EP-A- 0 303 438**          **EP-A- 0 303 439**
**EP-A- 0 629 578**          **EP-A- 0 725 038**
**DE-C- 844 373**            **US-A- 5 037 616**

**Description**

The present invention relates to equipment for carrying out partial oxidation by means of a suitable catalyst.

In particular this equipment can be used for producing synthesis gas by the partial oxidation of natural gas in the presence of oxygen and/or air by the reaction

$$CH_4 + 1/2O_2 \rightarrow CO + 2H_2 \tag{1}$$

On an industrial scale, the partial oxidation of natural gas is carried out with two types of technological solutions.

In the first type of technological solution non-catalytic reactors are used in which the reaction gases are mixed in a water-cooled burner and react in a combustion chamber (T=1300-1500°C) lined with refractory materials. In this process the partial oxidation reactions (OP) (1) compete with the following total oxidation reactions (2) and with the cracking reactions (3):

$$CH_4 + 2O_2 \rightarrow CO_2 + 2H_2O \tag{2}$$

$$CH_4 \rightarrow C + 2H_2 \tag{3}$$

In addition, the sub-stoichiometric combustion reactions cause radicalic dehydrogenation reactions of the molecules with two or more carbon atoms and the formation of ethylene and/or acetylene compounds. These in turn can be precursors of carbonaceous residues.

The reaction products enter at 1400°C into an exchanger whose design and functioning are complicated by the combination of factors relating to the high temperature and presence of carbonaceous residues. To eliminate the carbonaceous residues from the products the synthesis gas is washed with water.

The selectivity and conversions depend on various factors among which the most important are:

- design of the burner;
- the ratio $O_2/C$ (oxygen moles/carbon atom moles) in the mixture of the reagents;
- reduced residence time inside the reactor;
- the rapid cooling of the reaction products which at intermediate temperatures (700-400°C) can recombine to reform methane and $H_2O$ by means of the reaction

$$CO + 3H_2 \rightarrow CH_4 + H_2O \tag{4}$$

In the second type of technological solution autothermal catalytic reactors are used.

In this process the streams of the preheated reagents are mixed at 500-650°C in a burner situated at the inlet of the reactor, generating a turbulent flame which spreads to a combustion chamber situated between the burner and an underlying catalytic bed.

The sub-stoichiometric combustion reactions use up part of the natural gas and produce mixtures of carbon monoxides and steam as well as the heat necessary for the following reforming strongly endothermic reactions of steam (5) and $CO_2$ (6):

$$CH_4 + H_2O \rightarrow CO + 3H_2 \tag{5}$$

$$CH_4 + CO_2 \rightarrow 2CO + 2H_2 \tag{6}$$

The latter take place in a catalytic bed beneath the combustion chamber filled with a catalyst based on Ni (15-30% by weight deposited on spinels of aluminium and magnesium oxides with a high thermal resistance). These reactors operate at a GHSV which is typically between 5000-10000 NL/(Lcat x h) and in any case not higher than 15000 NL/(Lcat x h).

As already mentioned, in the case of non-catalytic processes the synthesis gas produced must be purified by washing with water. In autothermal reactors on the other hand the unsaturated molecules and carbonaceous residues are decomposed in the catalytic bed making the washing of the gas useless; also the temperatures leaving the reactor are lower (typically 950°C). These characteristics simplify the characteristics of the exchangers for the thermal recovery of the gas leaving the reactor and improve the thermal efficiency of the process.

Several patent applications have recently been published (WO-95/18062; EP-576096; EP-629578) which claim catalytic processes carried out at a high temperature (T>950°C) and also high pressure (P=1-150 Bars) in tubular reactors with a GHSV of between 20,000 and 20,000,000 NL/(Lcat x h).

In experiments carried out in our laboratories it has been found that the conditions of high temperature and high pressure claimed in these patents are difficult to apply at pressures greater than 10 atm and temperatures higher than 950°C as, under the fluid-dynamic conditions described, the mixtures of the reagents and products ignite in gaseous phase causing the total combustion of the hydrocarbons with losses in selectivity towards CO and $H_2$ and the formation of carbon black which rapidly blocks the catalytic bed.

In a recent patent application of the same applicant (EP-640559) integrated processes of catalytic partial oxidation are claimed for the production of CO and $H_2$ and the synthesis of methanol, dimethylether and FT, in which formaldehyde is also produced, carried out at temperatures of between 300 and 950°C, pressures of between 1 and 40 atms and a GHSV of between 20,000 and 1,500,000 NL/(L cat x h).

Also in this process, in which the operating conditions are less drastic than the three patents cited above, from which it also differs in the possibility of carrying out the reactions with $C_2/CH_4$ ratios > 0.5 (v/v), the process conditions are difficult to apply for the same reasons specified above when the pressures exceed 15 atms.

A catalytic reactor has new been found which improves the quality of the process claimed in the above application of the same applicant, capable of carrying out partial oxidation reactions which, apart from having considerably reduced dimensions with respect to those used in commercial processes, does not require the presence of a burner and enables partial oxidation catalytic reactions to be carried out maintaining the mixtures of reagents at rates higher than flame speed and avoiding drops in pressure due to expansion of the gaseous reaction mixture.

The equipment which is the main object of the present invention, comprises four operating zones, sequentially arranged, said four operating zones being:

- a feeding zone (A);
- a distribution zone (B) with a constant or decreasing section along the axis of the equipment in the direction of the gas propagation;
- a reaction zone (C), consisting of a catalytic bed, with an increasing section along the axis of the equipment in the direction of the gas propagation, communicating with said distribution zone by means of a common transversal section;
- a gas expansion zone (D).

The distribution zone (B) is preferably in the form of a cylindrical, truncated-conical or truncated-pyramidal solid, consisting of one or more parts of said solid, optionally substituted by their external or internal envelope curved surface, wherein the angle (α) of the generatrix with the vertical, parallel to said axis, is between 0 and 65°, more preferably between 10 and 45°.

The reaction zone (C) is preferably in the form of a truncated-conical or truncated-pyramidal solid, consisting of one or more parts of said solid, optionally substituted by their external or internal envelope curve surface, wherein the angle (β) of the generatrix with the vertical parallel to said axis is between 5 and 65°, more preferably between 10 and 45°.

The functions of the distribution zone are the following:

- to act as propagation barrier of the radicalic reactions towards the feeding inlet, both by acceleration of the fluid and by the presence of inert surfaces, capable of capturing the radicals;
- to distribute the fluid uniformly on the transversal section common to the two distribution and reaction zones.

The functions of the reaction zone are:

- to activate the reaction in the section where there is the highest gas velocity;
- to follow the expansion of the fluid due to an increase in the number of moles and temperature without the inconveniences caused by high losses in the charge;
- maintain a surface rate in the whole bed higher than the critical value which causes the production of flame and carbon black.

The fluid-dynamic conditions inside the reaction zone must be such as to avoid overheating of the reaction mixture but also drops in pressure in the direction of the gas propagation. The drop in pressure is caused by the rapid increase in the volume of the gaseous mixture in correspondence with the necking inside the catalytic zone. The stagnation of the reagent mixture upstream of the necking causes its overheating and ignition and must therefore be avoided.

The variation in the diameter of the reaction zone and the consequent decrease in the gas velocity reduces the effect of the drop in pressure. A differential filling of the catalytic bed with particles with an increasing diameter along the gas propagation direction contributes to reducing the drop in pressure.

The equipment of the present invention can have cooling systems both in the feeding zone and/or in the post-reaction zone and in the distribution and/or reaction zone.

The partial oxidation process with the catalytic autothermal reactor described above, which forms a second object of the present invention, basically consists in the following steps:

- premixing and, upon activation, preheating to temperatures of between 200 and 600°C, below flammability values, the reagents consisting of natural gas, oxygen or air or air enriched with oxygen, optionally steam and/or $CO_2$, so that the surface velocity of the reaction gases is maintained above the flame speed and the temperature of the reagent mixture in the zone preceding the catalytic bed is below its flammability temperature;
- reacting by interaction of the catalysts the mixture of reagents in the reaction zone, the reaction being activated at temperatures of between 200 and 600°C and carried out at space velocities of between 10,000 and 10,000,000 Nl reagents/L cat x h, more preferably between 100,000 and 5,000,000, reaching temperatures of between 700 and 1350°C.

The limits of the first step are necessary for avoiding the creation of uncontrolled combustion phenomena in gaseous homogeneous phase in the zone preceding or inside the catalytic bed. These reactions reduce the selectivity towards the production of synthesis gases, cause the formation of carbonaceous residues which deactivate the catalyst and when there is nitrogen in the reagent mixture, they also cause the formation of nitrogen oxides ($NO_x$).

The preferred ratios between the reagents in the reaction mixture consisting of natural gas, air or air enriched with oxygen, possibly steam and/or $CO_2$, are the following:

- ratio between steam moles/moles of hydrocarbon carbon atoms (steam/C) of between 0 and 3.5, more preferably between 0.1 and 1.5;
- ratio molecular oxygen moles/moles of hydrocarbon carbon atoms ($O_2$/C) of between 0.15 and 0.7, more preferably between 0.4 and 0.6.

The use of these space velocities allows very low quantities of catalyst to be consumed and high productivities to be obtained which easily exceed values of about 200,000 $m^3$ CO + $H_2$/day x kg catalyst, i.e. twice as higher than those obtained with the known processes for the production of synthesis gases.

The presence of steam and $CO_2$ as well as other molecules more chemically inert, such as nitrogen, changes the flammibility point of the gaseous reagent mixtures, enabling the geometry to be varied in the reaction zone and higher pressures to be applied with lower surface velocities.

In the reactor adopted in the process, catalysts are preferably used in which one or more noble metals (Rh, Ru, Ir, Pd, Pt, etc.) and/or Ni are deposited on a carrier consisting of a material capable of supporting considerable thermal and mechanical stress (typically Sic, $Mg_xAl_yO_2$, $\alpha$-$Al_2O_3$, $ZrO_2$, yttrium stabilized with zirconium). The catalysts are prepared by anchoring the noble metals (preferably Rh, Ru, Ir) and/or Ni in percentages of between 0.05 and 15% by weight, preferably between 0.1 and 5% by weight, onto the carriers. This operation is carried out with three methods.

A first method is carried out by solid-liquid reactions, by interaction between the carriers dispersed in an organic solvent and solutions of clusters of noble metals (such as $Rh_4(CO)_{12}$, $Rh_6(CO)_{16}$, $Ru_3(CO)_{12}$, $Ir_4(CO)_{12}$;

A second method is carried out by impregnation of the solid carriers with water solutions of inorganic salts of noble metals (such as $RhCl_3$, $Rh(NO_3)_3.xH_2O$, $Ru(NO)(NO_3)_3.xH_2O$, $NiNO_3.xH_2O$).

The method which comprises the use of small carbonyl clusters of noble metals enables the production of particularly active catalysts, capable of activating partial oxidation reactions at lower temperatures (typically 250°C). The method comprising the use of inorganic salts of noble metals leads to the production of catalytic materials capable of activating combustion reactions only at temperatures higher than 350°C. In both cases however the activating temperatures are much lower than those used in the burners of non-catalytic reactors or catalytic autothermal reactors.

A third method for preparing the catalysts involves the synthesis of an intermediate of the hydrotalcite type, described in patent application IT-Mi95A00184 corresponding to EP-A-0725038, represented with the formula:

$$[Rh_aRu_bX_cY_d(OH)_2]^{z+}(A^{n-}_{z/n}).mH_2O$$

wherein

X is a bivalent or monovalent metal cation
Y is a trivalent or tetravalent metal cation
$0 \le a \le 0.5$, $0 \le b \le 0.5$, $0.5 \le c \le 0.9$,
$0 \le d \le 0.5$, $a + b + c + d = 1$,
m is equal to zero or a positive number,
A can be a hydroxyl, any inorganic, organic anion, iso or heteropolyanion, anionic complex or organometallic complex, having n charge,
z is the total charge of the cationic component.

The atomic ratios between the elements are preferably within the following ranges:
$0 \le a \le 0.33$, $0 \le b \le 0.33$, $0.66 \le c \le 0.8$,
$0 \le d \le 0.33$.

The bivalent metal cation X is preferably selected from Mg, Ni, Co, Zn, Fe, Mn, Cu, Ca and Cd. The monovalent metal cation X is preferably lithium. The trivalent metal cation Y is preferably selected from Al, Ga, Ni, Co, Fe, Mn, Cr, V, Ti and In. The tetravalent metal cation Y is preferably titanium.

The hydrotalcite intermediate is subjected to a thermal treatment at temperatures higher than $700^\circ$C before being used in the catalytic reactions.

The preparation of the hydrotalcite material described above can be carried out as described in "Catalysis Today", 11, 173 (1991) (F.Cavani, F.Trifiro and A.Vaccari) and in "Expanded Clays and Other Microporous Solids", (A de Roy, C.Forano, K.El Malki and J.P.Besse) Ed., M.L.Occelli and H.E.Robson, Vol.2, Reinhold, New York, 1992, page 108).

In particular the hydrotalcite catalytic materials can be prepared using a water solution containing in suitable proportions the salts of rhodium and/or ruthenium, a bivalent or monovalent element and another trivalent or also tetravalent element. This solution is added under vigorous stirring and at a temperature of between 30 and $90^\circ$C, and preferably between 50 and $70^\circ$C, to a solution of alkaline carbonate or bicarbonate, care being taken, also by the additional addition of acids or bases, that the pH be maintained during the precipitation at a constant value within the range of 7-12 and preferably 8-11. In this way there is the simultaneous precipitation of all the elements and their fine interdispersion. The crystalline precipitate formed is separated and washed with water, preferably hot, until there is a content of alkaline expressed as oxide of less than 0.1%. The precipitate is subsequently dried at $100^\circ$C and calcined in air or nitrogen at a temperature of between 200 and $1100^\circ$C, preferably between 350 and $950^\circ$C.

To come back to the composition of the catalysts both rhodium and ruthenium can be used simultaneously or rhodium and nickel, the rhodium being used in a first layer of the catalytic bed and the ruthenium or nickel in a second layer of the bed underneath the first.

In this case the catalytic bed containing rhodium is preferably between 20 and 35% by volume of the whole catalytic bed.

With this configuration, it is possible to reduce, if necessary owing to lack of availability and/or high costs, the use of rhodium in the whole catalytic bed, by completely substituting it with ruthenium or with nickel and using compositions of the charge and reaction conditions which are less favourable to cracking reactions of the hydrocarbons.

With respect to the catalytic bed, it is advisable to fill this with catalyst having an increasing average particle diameter along the direction of the gas propagation so as to increase the vacuum degree and reduce losses of the charge.

A particular advantage of the catalytic reactor described above and consequently of the processes in which it is used, consists in enabling the production of synthesis gases using mixtures containing air or air enriched with oxygen reducing the formation of $NO_x$.

This surprising advantage allows the partial oxidation catalytic reactor to be used both for the production of CO and $H_2$ for chemical use and for the generation of electric energy with gas turbines thus avoiding polluting effects due to the production of $NO_x$.

At present pollution due to the production of $NO_x$ is reduced by the use of selective reduction processes in the presence of ammonia whose chemistry is synthetically represented by the equation:

$$NH_3 + NO_x \rightarrow N_2 + H_2O \qquad (7)$$

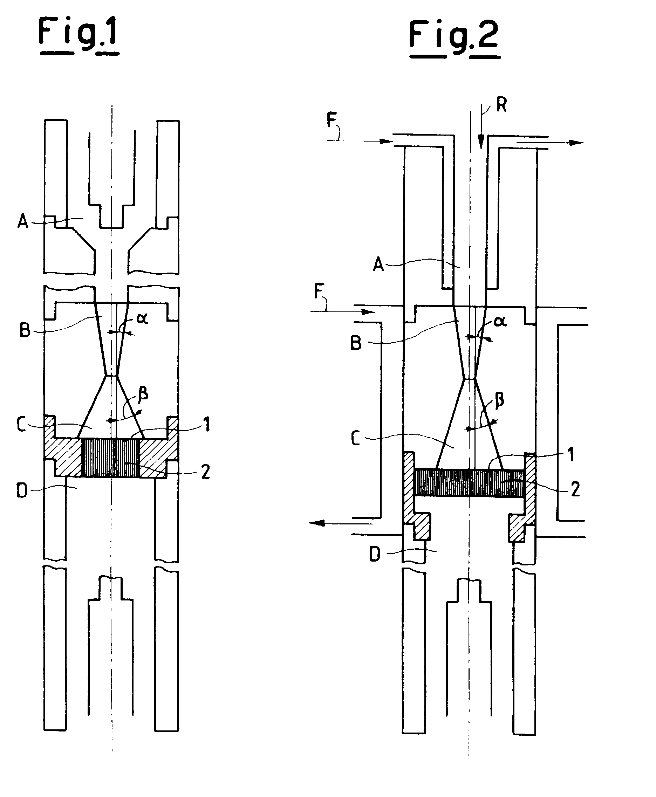

An embodiment of the invention is provided with the help of fig. 1, but this should not be considered as limiting the scope of the invention.

The equipment consists of a first feeding zone (A), followed by a distribution zone (B), with a decreasing section, in the form of a truncated cone, having the a angle of the generatrix with the vertical equal to 25°, followed by a reaction zone (C),having the circle-shaped section (1) in common with the previous zone, with an increasing section, in the form of a truncated cone, having the β angle of the generatrix with the vertical equal to 35°, followed by an expansion zone (D) consisting of a honeycomb carrier (2) and a wider chamber.

The following examples provide a better illustration of both the catalytic reactor and the process claimed.

Example 1 - Comparative

Refractory alumina cylinders shaped so as to be able to contain a conventional cylindrical catalytic bed (diameter 15 mm, height 20 mm, weight 1 g) are introduced into a cylindrical steel reactor having a thickness of 1 cm and an internal diameter of 5 cm. The catalyst was obtained using as carrier a foamy ceramic monolith in $\alpha$-$Al_2O_3$ with a porosity of 30 pores per inch (ppi), containing 3% by weight of Ru. The noble metal was deposited by dripping a water solution of $Ru(NO)(NO_3).xH_2O$ onto the monolith; the monolith was subsequently calcined for 4 h at a temperature of 550°C, to decompose the ruthenium salts. The metal of the carrier was subjected to thermal treatment in an atmosphere of $H_2/N_2$ = 1/1 (v/v) at 600°C for 8 hours before the beginning of the catalytic test.

The test was carried out at a pressure of 6 atm., air cooling helped to maintain the temperature of the reagents at the inlet at less than 300°C. A series of thermocouples, inserted in two sheaths, the internal one made of steel and the external one of quartz, situated along the longitudinal section of the reactor, enabled the temperature to be monitored in different positions and in particular at the inlet and outlet of the catalytic bed (at 5 and 9 mm therefrom respectively). The mixture of outgoing products is cooled with a ceramic water exchanger. The duration of the catalytic test was 100 h. In this test the feeding (1000 Nl/h) consisted of a mixture of $CH_4$, $O_2$ and $H_2O$ in a ratio of 2/1/1.

The operating conditions and results are summarized in table 1.

At pressures higher than 8.5 atms. the cylindrical reactor no longer enabled the operating parameters to be correctly handled owing to the uncontrolled formation of flame reactions and an increase in the loss values of the charge.

Examples 2-5

Refractory alumina cylinders shaped so as to be able to form a gas distribution zone and an sandglass-shaped catalytic bed as schematized in fig. 2, are introduced into a cylindrical steel reactor having a thickness of 1 cm and an internal diameter of 5 cm.

The equipment consists of:

- a first feeding zone (A) into which the reagents are charged, equipped with a cooling system using a suitable fluid (F);
- a distribution zone (B), with a decreasing section, in the form of a truncated cone, having the $\alpha$ angle of the generatrix with the vertical equal to 20° on the outside of which is a cooling system;
- a reaction zone (C), having the circle-shaped section (1) in common with the previous zone, with an increasing section, in the form of a truncated cone, having the β angle of the generatrix with the vertical equal to 30°, on the outside of which is a cooling system;
- a post-reaction zone consisting of a honeycomb carrier (2) and a wider chamber equipped with a cooling system.

The distribution system of the reagent mixture was obtained using alumina spherical particles (d = 1.5-2 mm), calcined for 4 h at 1020°C. The distributor has a diameter at the inlet ($r_i$) of 15 mm, a diameter at the outlet ($r_f$) of 5 mm and a length (L) of 20 mm. The catalytic bed (2.45 g) was formed using the same alumina particles used in the distributor, containing 0.5% of Rh. The noble metal was deposited on the alumina by contact with a solution of $Rh_4(CO)_{12}$ in n-hexane. After drying the catalyst was charged into the reactor and used in reaction without any activation treatment. The dimensions of the reaction zone are the following:

$r_i$ = 5 mm; $r_f$ = 25 mm; L = 20 mm.

As a support for the spherical particles of catalyst a porous ceramic monolithic disk was used, with 40 ppi, in alumina (diameter 40 mm and thickness 20 mm).

The test was carried out at a pressure of 10 atms. The thermocouples for monitoring the temperature at the inlet and outlet of the catalytic bed were positioned at a distance of 25 and 27 mm respectively. The duration of the catalytic test was 20 h. The pressure loss was equal to about 0.2 atms. In these examples $CH_4$ and $O_2$ were fed with volumetric ratios $CH_4/O_2$ varying from 2.4 to 6. During the catalytic tests the temperature of the gas at the inlet of the distribution zone was maintained at between 250 and 300°C.

The results obtained are shown in table 2.

Example 6

The same experimental conditions were applied as in examples 2-5 with the same catalyst, but feeding in addition to $CH_4$ and $O_2$, also $CO_2$ in the ratio of 8:4:1.
The results obtained are shown in table 2.

Examples 7-9

In this case the distribution zone has a diameter at the inlet ($r_i$) of 15 mm, a diameter at the outlet ($r_f$) of 5 mm and a length (L) of 20 mm, whereas the catalytic reaction zone is characterized by an $r_i$ of 5 mm, an $r_f$ of 33mm and a length equal to 30 mm.
The catalyst is obtained using the same alumina spherical particles described in examples 2-6 but with an increasing diameter of between 1.5 and 5 mm. As a support for the catalyst a porous ceramic monolithic zirconia disk was used (40 ppi), having a diameter of 40 mm and a thickness of 20 mm. The catalytic test was carried out at a pressure of 17 atms. To increase the thermal exchange and reduce the temperatures at the inlet an air-cooling circuit was used consisting of a copper perforated tube, ring-shaped and positioned around the core of the reactor. The thermocouples for monitoring the temperature at the inlet and outlet of the catalytic bed were positioned in both cases at a distance of 25 mm. In example 7 a reagent mixture consisting of $CH_4$, $O_2$ was fed in a ratio of 3:1. In example 9 a reagent mixture consisting of $CH_4$, $O_2$ and $CO_2$ was fed in a ratio of 4:2:1. The remaining experimental conditions are the same as in example 1. The operating conditions and results of the catalytic tests described in examples 7, 8 and 9 are schematized in table 3.

Table 1

|  | Ex. 1 |
|---|---|
| P (atm) | 6 |
| GHSV ($h^{-1}$) | 1000000 |
| $CH_4/O_2$ | 2 |
| $T_{in}$ cat(°C) | 502 |
| $T_{out}$ cat(°C) | 878 |
| v $gas_{in}$ (m/s) | 0.87 |
| v $gas_{out}$ (m/s) | 2.39 |
| % Convers. $CH_4$ | 92.7 |
| % Convers. $O_2$ | 100 |
| % Select. CO | 92.7 |
| % Select. $H_2$ | 98.6 |
| $CH_4$ % (gas out) | 1.9 |
| $O_2$ % ( " ") | 0 |
| CO % ( " ") | 22.6 |
| $H_2$ % ( " ") | 48.4 |
| $CO_2$ % ( " ") | 5.1 |
| $H_2O$ % ( " ") | 21.9 |
| (Selectivities to CO and $H_2$ are calculated on the basis of the conversion of $CH_4$) | |

Table 2

|  | Ex. 2 | Ex.3 | Ex.4 | Ex.5 | Ex.6 |
|---|---|---|---|---|---|
| P (atm) | 10 | 10 | 10 | 10 | 10 |
| GHSV ($h^{-1}$) | 381220 | 408160 | 434690 | 464080 | 530610 |
| $CH_4/O_2$ | 6 | 4 | 3 | 2.4 | 2 |
| $T_{in}$ cat(°C) | 346 | 263 | 259 | 264 | 362 |
| $T_{out}$ cat(°C | 625 | 662 | 704 | 714 | 762 |

Table 2   (continued)

|  | Ex. 2 | Ex.3 | Ex.4 | Ex.5 | Ex.6 |
|---|---|---|---|---|---|
| v gas$_{in}$ (m/s) | 4.15 | 2.98 | 3.14 | 3.41 | 4.28 |
| v gas$_{out}$ (m/s) | 0.45 | 0.32 | 0.36 | 0.44 | 0.56 |
| % Convers. $CH_4$ | 27.4 | 36.1 | 48.8 | 49.1 | 75.5 |
| % Convers. $O_2$ | 100 | 100 | 100 | 100 | 100 |
| % Select. CO | 81.8 | 85.1 | 84.5 | 83.8 | 99.7 |
| % Select. $H_2$ | 84.5 | 91.0 | 86.4 | 81.0 | 86.0 |
| $CH_4$ % (gas out) | 47.4 | 37.4 | 26.3 | 25.9 | 9.3 |
| $O_2$ % ( " ") | 0 | 0 | 0 | 0 | 0 |
| CO % ( " ") | 14.7 | 17.9 | 21.1 | 20.9 | 28.5 |
| $H_2$ % ( " ") | 30.3 | 38.3 | 43.3 | 40.4 | 49.2 |
| $CO_2$ % ( " ") | 2.7 | 2.5 | 2.2 | 1.9 | 4.6 |
| $H_2O$ % ( " ") | 4.9 | 3.8 | 7.1 | 10.9 | 8.4 |

(Selectivities to CO and $H_2$ are calculated on the basis of the conversion of $CH_4$).

Table 3

|  | Ex. 7 | Ex.8 | Ex.9 |
|---|---|---|---|
| P (atm) | 17 | 17 | 17 |
| GHSV (h$^{-1}$) | 164180 | 158960 | 208955 |
| $CH_4/O_2$ | 4 | 3 | 2 |
| $T_{in}$ cat(°C) | 372 | 273 | 372 |
| $T_{out}$ cat(°C | 641 | 619 | 788 |
| v gas$_{in}$ (m/s) | 2.53 | 2.08 | 3.21 |
| v gas$_{out}$ (m/s) | 0.14 | 0.14 | 0.27 |
| % Convers. $CH_4$ | 31.4 | 43.7 | 88.7 |
| % Convers. $O_2$ | 100 | 100 | 100 |
| % Select. CO | 90.4 | 85.7 | 90.8 |
| % Select. $H_2$ | 74.5 | 79.3 | 69.1 |
| $CH_4$ % (gas out) | 40.5 | 30.2 | 4.6 |
| $O_2$ % ( " ") | 0 | 0 | 0 |
| CO % ( " ") | 16.8 | 20.1 | 32.8 |
| $H_2$ % ( " ") | 27.7 | 37.2 | 49.9 |
| $CO_2$ % ( " ") | 5.8 | 2.9 | 3.8 |
| $H_2O$ % ( " ") | 9.3 | 9.7 | 8.9 |

(Selectivities to CO and $H_2$ are calculated on the basis of the conversion of $CH_4$).

**Claims**

1. Equipment for carrying out partial oxidations comprising four operating zones sequentially aranged, characterized in that said four operating zones are :

   - a feeding zone (A) ;
   - a distribution zone (B) with a constant or decreasing section along the axis of the equipment in the direction of the gas propagation;
   - a reaction zone (C), consisting of a catalytic bed, with an increasing section along the axis of the equipment in the direction of the gas propagation, communicating with said distribution zone by means cf a common transversal section:
   - a gas expansion zone (D).

2. Equipment according to claim 1 wherein the distribution zone (B), with a constant or decreasing section, is in the

8

form of a cylindrical, truncated-conical or truncated-pyramidal solid, consisting of one or more parts of said solid, optionally substituted by their external or internal envelope curved surface, wherein the angle ($\alpha$) of the generatrix with the vertical, parallel to the axis of said equipment, is between 0 and 65°, and the reaction zone (C) with an increasing section, communicating with the distribution zone by means of a common transversal section, is in the form of a truncated-conical or truncated-pyramidal solid, consisting of one or more parts of said solid, optionally substituted by their external or internal envelope curve surface, wherein the angle ($\beta$) of the generatrix with the vertical, parallel to the axis of said equipment, is between 5 and 65°.

3. Equipment according to claim 2 wherein the angle $\alpha$ is between 10 and 45° and the angle $\beta$ is between 10 and 45°.

4. Equipment according to claim 1 wherein the feeding zone is equipped with a cooling system of the reagents.

5. Equipment according to claim 1 wherein the expansion zone is equipped with a cooling system.

6. Equipment according to claim 1 wherein the distribution and/or reaction zone is equipped with a cooling system.

7. Process of partial oxidation with the use of the equipment according to any of the claims from 1 to 6 comprising the following steps:

- premixing and, upon activation, preheating to temperatures of between 200 and 600°C, below flammability values, the reagents consisting of natural gas, oxygen or air or air enriched with oxygen, optionally steam and/or $CO_2$, so that the surface velocity of the reaction gases is maintained above the flame speed and the temperature of the reagent mixture in the zone preceding the catalytic bed is below its flammability temperature;
- reacting by interaction of the catalysts the mixture of reagents in the reaction zone, the reaction being activated at temperatures of between 200 and 600°C and carried out at space velocities of between 10,000 and 10,000,000 Nl reagents/L cat x h, reaching temperatures of between 700 and 1350°C.

8. Process according to claim 7 wherein the reaction is activated at temperatures of between 250 and 450°C, whereas the space velocities are between 100,000 and 5,000,000 Nl reagents/L cat x h.

9. Process according to claim 7 wherein, among the reagents, the ratio between steam moles/moles of hydrocarbon carbon atoms (steam/C) is between 0 and 3.5
and the ratio between molecular oxygen moles/ moles of hydrocarbon carbon atoms ($O_2$/C) is between 0.15 and 0.7.

10. Process according to claim 9 wherein the ratio between steam moles/moles of hydrocarbon carbon atoms (steam/C) is between 0.1 and 1.5 and the ratio between molecular oxygen moles/moles of hydrocarbon carbon atoms ($O_2$/C) is between 0.4 and 0.6.

11. Process according to claim 7 wherein the distribution zone of the equipment is filled with foamy monoliths and/or particles of ceramic material.

12. Process according to claim 11 wherein the porous ceramic material is selected from $\alpha$-$Al_2O_3$, $Al_xMg_yO_z$, $ZrO_2$ and SiC.

13. Process according to claim 7 wherein the catalyst consists of a compound of one or more noble metals and/or a compound of nickel deposited on a suitable carrier in a quantity of between 0.05 and 15% by weight.

14. Process according to claim 13 wherein the noble metals and/or nickel deposited on the carrier are in a quantity of between 0.1 and 5% by weight.

15. Process according to claim 13 wherein the noble metals are selected from rhodium, ruthenium, iridium, palladium and platinum.

16. Process according to claim 13 wherein the metals are rhodium and ruthenium or rhodium and nickel, the rhodium being used in a first layer of the catalytic bed and the ruthenium or nickel in a second layer of the bed underneath the first.

**17.** Process according to claim 16 wherein the catalytic bed containing rhodium is between 20 and 35% by volume of the whole catalytic bed.

**18.** Process according to claim 7 wherein the catalyst is a hydrotalcite intermediate, subjected to thermal treatment at temperatures higher than 700°C before being used in the catalytic reaction, having the following formula:

$$[Rh_a Ru_b X_c Y_d (OH)_2]^{z+} (A^{n-}_{z/n}).mH_2O$$

wherein

X is a bivalent or monovalent metal cation
Y is a trivalent or tetravalent metal cation
$0 \leq a \leq 0.5, 0 \leq b \leq 0.5, 0.5 \leq c \leq 0.9,$
$0 \leq d \leq 0.5, a + b + c + d = 1,$
m is equal to zero or a positive number,
A can be a hydroxyl, any inorganic, organic anion, iso or heteropolyanion, anionic complex or organometallic complex, having n charge,
z is the total charge of the cationic component.

**19.** Process according to claim 7 wherein the catalytic bed is filled with catalyst having an increasing average diameter of the particles along the direction of the gas propagation.

**Patentansprüche**

**1.** Anlage zur Durchführung von Teiloxidationen, umfassend vier aufeinanderfolgend angeordnete Arbeitszonen, dadurch gekennzeichnet, daß diese vier Arbeitszonen sind:

- eine Einspeiszone (A);
- eine Verteilerzone (B) mit einem konstanten oder abnehmenden Abschnitt längs der Achse der Anlage in der Richtung der Gasausbreitung;
- eine Reaktionszone (C), bestehend aus einem katalytischen Bett, mit einem anwachsenden Abschnitt längs der Achse der Anlage in der Richtung der Gasausbreitung, welche mit dieser Verteilerzone mittels eines gemeinsamen Querabschnittes kommuniziert;
- eine Gasexpansionszone (D).

**2.** Anlage nach Anspruch 1, bei welcher die Verteilerzone (B) mit einem konstanten oder abnehmenden Abschnitt in Form eines zylindrischen, stumpf-kegelförmigen oder stumpf-pyramidenförigen Festkörpers vorliegt, bestehend aus einem oder mehreren Teilen dieses Festkörpers, wahlweise ersetzt durch ihre äußere oder innere Hüllkurvenoberfläche, bei welcher der Winkel ($\alpha$) der Erzeugenden mit der Senkrechten, parallel zur Achse dieser Anlage, zwischen 0 und 65° beträgt, und die Reaktionszone (C) mit einem anwachsenden Abschnitt, welche mit der Verteilerzone mittels eines gemeinsamen Querabschnittes kommuniziert, in Form eines stumpf-konischen oder stumpf-pyramidenförigen Festkörpers vorliegt, bestehend aus einem oder mehreren Teilen dieses Festkörpers, wahlweise ersetzt durch ihre äußere oder innere Hüllkurvenoberfläche, bei welcher der Winkel ($\beta$) der Erzeugenden mit der Senkrechten, parallel zur Achse dieser Anlage, zwischen 5 und 65° beträgt.

**3.** Anlage nach Anspruch 2, bei welcher der Winkel $\alpha$ zwischen 10 und 45° beträgt, und der Winkel $\beta$ zwischen 10 und 45° beträgt.

**4.** Anlage nach Anspruch 1, bei welcher die Einspeiszone mit einem Kühlsystem für die Reaktionsteilnehmer ausgerüstet ist.

**5.** Anlage nach Anspruch 1, bei welcher die Expansionszone mit einem Kühlsystem ausgerüstet ist.

**6.** Anlage nach Anspruch 1, bei welcher die Verteiler- und/oder die Reaktionszone mit einem Kühlsystem ausgerüstet ist.

**7.** Verfahren der Teiloxidation unter Verwendung der Anlage nach einem der Ansprüche 1 bis 6, umfassend die folgenden Stufen:

- Vormischen und bei Aktivierung Vorerhitzen auf Temperaturen zwischen 200 und 600°C unterhalb Entflammbarkeitswerten der Reaktionsteilnehmer, bestehend aus Erdgas, Sauerstoff oder Luft oder mit Sauerstoff angereicherter Luft, wahlweise Dampf und/oder $CO_2$, derart, daß die Oberflächengeschwindigkeit der Reaktionsgase oberhalb der Flammengeschwindigkeit gehalten wird und die Temperatur des Reaktionsteilnehmergemisches in der dem katalytischen Bett vorangehenden Zone unterhalb seiner Entflammbarkeitstemperatur liegt;
- Umsetzung unter Wechselwirkung mit den Katalysatoren des Reaktionsteilnehmergemisches in der Reaktionszone, wobei Reaktionsteilnehmergemisches in der Reaktionszone, wobei die Reaktion bei Temperaturen zwischen 200 und 600°C aktiviert wird und bei Raumgeschwindigkeiten zwischen 10.000 und 10.000.000 Nl Reaktionsteilnehmer/l Kat x h unter Erreichen von Temperaturen zwischen 700 und 1350°C durchgeführt wird.

**8.** Verfahren nach Anspruch 7, bei welchem die Reaktion bei Temperaturen zwischen 250 und 450°C aktiviert wird, während die Raumgeschwindigkeiten zwischen 100.000 und 5.000.000 Nl/l Kat x h liegen.

**9.** Verfahren nach Anspruch 7, bei welchem unter den Reaktionsteilnehmern das Verhältnis zwischen Molen Dampf/ Molen Kohlenwasserstoff-Kohlenstoffatomen (Dampf/C) zwischen 0 und 3,5 liegt, und das Verhältnis zwischen Molen molekularem Sauerstoff/Molen Kohlenwasserstoff-Kohlenstoffatomen ($O_2$/C) zwischen 0,15 und 0,7 liegt.

**10.** Verfahren nach Anspruch 9, bei welchem das Verhältnis zwischen Molen Dampf/Molen Kohlenwasserstoff-Kohlenstoffatomen (Dampf/C) zwischen 0,1 und 1,5 liegt, und das Verhältnis zwischen Molen molekularem Sauerstoff/ Molen Kohlenwasserstoff-Kohlenstoffatomen ($O_2$/C) zwischen 0,4 und 0,6 liegt.

**11.** Verfahren nach Anspruch 7, bei welchem die Verteilerzone der Anlage mit schaumartigen Monolithen und/oder Teilchen aus keramischem Material gefüllt ist.

**12.** Verfahren nach Anspruch 11, bei welchem das poröse keramische Material ausgewählt ist aus $\alpha$-$Al_2O_3$, $Al_xMg_yO_z$, $ZrO_2$ und SiC.

**13.** Verfahren nach Anspruch 7, bei welchem der Katalysator aus einer Verbindung von einem oder mehreren Edelmetallen und/oder einer Verbindung von Nickel, abgelagert auf einem geeigneten Träger in einer Menge zwischen 0,05 und 15 Gew.-%, besteht.

**14.** Verfahren nach Anspruch 13, bei welchem die Edelmetalle und/oder das Nickel, welche auf dem Träger abgelagert sind, in einer Menge zwischen 0,1 und 5 Gew.-% vorliegen

**15.** Verfahren nach Anspruch 13, bei welchem die Edelmetalls ausgewählt sind aus Rhodium, Ruthenium, Iridium, Palladium und Platin.

**16.** Verfahren nach Anspruch 13, bei welchem die Metalle Rhodium und Ruthenium oder Rhodium und Nickel sind, wobei das Rhodium in einer ersten Schicht des katalytischen Bettes eingesetzt wird, und das Ruthenium oder Nickel in einer zweiten Schicht des Bettes unterhalb des ersten eingesetzt wird.

**17.** Verfahren nach Anspruch 16, bei welchem das Rhodium enthaltende katalytische Bett zwischen 20 und 35 Vol-% des gesamten katalytischen Bettes ausmacht.

**18.** Verfahren nach Anspruch 7, bei welchem der Katalysator ein Hydrotalcit-Zwischenprodukt, das thermischer Behandlung bei Temperaturen höher als 700°C vor dem Gebrauch in der katalytischen Reaktion unterworfen wurde, ist, welches die folgende Formel hat:

$$[Rh_aRu_bX_cY_d(OH)_2]^{z+}(A^{n-}_{z/n}).mH_2O$$

worin

X ein zweiwertiges oder einwertiges Metallkation ist,

Y ein dreiwertiges oder vierwertiges Metallkation ist,

$0 \leq a \leq 0,5, 0 \leq b \leq 0,5, 0,5 \leq c \leq 0,9,$

$0 \leq d \leq 0,5, a + b + c + d = 1$

m gleich null oder eine positive Zahl ist,

A ein Hydroxylanion, ein beliebiges anorganisches, organisches Anion, Iso- oder Heteropolyanion, ein anionischer Komplex oder ein organometallischer Komplex mit einer Ladung n sein kann,

z die Gesamtladung der kationischen Komponente ist.

19. Verfahren nach Anspruch 7, bei welchem das katalytische Bett mit einem Katalysator gefüllt ist, der einen zunehmenden Durchschnittsdurchmesser der Teilchen längs der Richtung der Gasausbreitung aufweist.

## Revendications

1. Equipement pour effectuer des oxydations partielles comprenant quatre zones de fonctionnement disposées en série, caractérisé en ce que lesdites zones de fonctionnement au nombre de quatre sont :

   - une zone d'alimentation (A) ;
   - une zone de distribution (B) présentant une section constante ou décroissante le long de l'axe de l'équipement dans la direction de propagation des gaz ;
   - une zone de réaction (C) constituée d'un lit catalytique, présentant une section croissante le long de l'axe de l'équipement dans la direction de propagation des gaz et communiquant avec ladite zone de distribution au moyen d'une section transversale commune ;
   - une zone d'expansion (D) des gaz.

2. Équipement selon la revendication 1, dans lequel la zone de distribution (B) présentant une section constante ou décroissante, se présente sous la forme d'un solide cylindrique, conique tronqué ou pyramidal tronqué, et est constituée d'une ou de plusieurs parties dudit solide, éventuellement remplacées par leur surface courbe d'enveloppe intérieure ou extérieure, dans laquelle l'angle ($\alpha$) que fait la génératrice avec la verticale, parallèle à l'axe dudit équipement, vaut de 0 à 65°, et dans lequel la zone de réaction (C) présentant une section croissante et communiquant avec la zone de distribution au moyen d'une section transversale commune, se présente sous la forme d'un solide conique tronqué ou pyramidal tronqué, et est constituée par une ou plusieurs parties dudit solide, remplacées éventuellement par leur surface courbe d'enveloppe intérieure ou extérieure, dans laquelle l'angle ($\beta$) que fait la génératrice avec la verticale, parallèle à l'axe dudit équipement, vaut de 5 à 65°.

3. Équipement selon la revendication 2, dans lequel l'angle $\alpha$ vaut de 10 à 45 ° et l'angle $\beta$ vaut de 10 à 45 °.

4. Équipement selon la revendication 1, dans lequel la zone d'alimentation est équipée d'un système de refroidissement des réactifs.

5. Équipement selon la revendication 1, dans lequel la zone d'expansion est équipée d'un système de refroidissement.

6. Équipement selon la revendication 1, dans lequel la zone de distribution et/ou la zone de réaction est équipée d'un système de refroidissement.

7. Procédé d'oxydation partielle utilisant l'équipement selon l'une quelconque des revendications 1 à 6, comprenant les étapes suivantes qui consistent à :

   - prémalaxer, et lors de l'activation, à préchauffer à des températures de 200 à 600 °C, en-dessous des valeurs d'inflammabilité, les réactifs composés de gaz naturel, d'oxygène ou d'air, ou d'air enrichi en oxygène, éventuellement de vapeur d'eau et/ou de $CO_2$, de sorte que la vitesse superficielle des gaz de réaction est maintenue au-dessus de la vitesse de propagation des flammes et la température du mélange réactionnel dans la zone précédant le lit catalytique est inférieure à sa température d'inflammabilité ;
   - faire réagir par interaction des catalyseurs, le mélange de réactifs dans la zone réactionnelle, la réaction étant activée à des températures de 200 à 600 °C et effectuée à des vitesses spatiales de 10 000 à 10 000 000 NI de réactifs/litre de catalyseur x h, atteignant des températures de 700 à 1 350 °C.

**8.** Procédé selon la revendication 7, dans lequel la réaction est activée à des températures de 250 à 450 °C, tandis que les vitesses spatiales vont de 100 000 à 5 000 000 Nl de réactifs/litre de catalyseur x h.

**9.** Procédé selon la revendication 7, dans lequel, parmi les réactifs, le rapport entre le nombre de moles de vapeur d'eau et le nombre de moles d'atomes de carbone dans l'hydrocarbure (vapeur/C) va de 0 à 3,5, et le rapport entre le nombre de moles d'oxygène moléculaire et le nombre de moles d'atomes de carbone dans l'hydrocarbure ($O_2$/C) va de 0,15 et 0,7.

**10.** Procédé selon la revendication 9, dans lequel le rapport entre le nombre de moles de vapeur d'eau et le nombre de moles d'atomes de carbone dans l'hydrocarbure (vapeur/C) va de 0,1 à 1,5, et le rapport entre le nombre de moles d'oxygène moléculaire et le nombre de moles d'atomes de carbone dans l'hydrocarbure ($O_2$/C) va de 0,4 à 0,6.

**11.** Procédé selon la revendication 7, dans lequel la zone de distribution de l'équipement est remplie avec des particules et/ou des monolithes mousseux de matériau céramique.

**12.** Procédé selon la revendication 11, dans lequel le matériau céramique poreux est choisi parmi $\alpha$-$Al_2O_3$, $Al_xMg_yO_z$, $ZrO_2$ et SiC.

**13.** Procédé selon la revendication 7, dans lequel le catalyseur comprend un composé d'un ou de plusieurs métaux nobles et/ou un composé de nickel déposé sur un support approprié en une quantité allant de 0,05 à 15 % en poids.

**14.** Procédé selon la revendication 13, dans lequel les métaux nobles et/ou le nickel déposés sur le support se trouvent en une quantité allant de 0,1 à 5 % en poids.

**15.** Procédé selon la revendication 13, dans lequel les métaux nobles sont choisis parmi le rhodium, le ruthénium, l'iridium, le palladium et le platine.

**16.** Procédé selon la revendication 13, dans lequel les métaux sont le rhodium et le ruthénium, ou le rhodium et le nickel, le rhodium étant utilisé dans une première couche du lit catalytique et le ruthénium ou le nickel dans une seconde couche du lit en dessous de la première.

**17.** Procédé selon la revendication 16, dans lequel le lit catalytique contenant du rhodium représente de 20 à 35 % en volume du lit catalytique entier.

**18.** Procédé selon la revendication 7, dans lequel le catalyseur est un produit intermédiaire de type hydrotalcite, soumis à un traitement thermique à des températures supérieures à 700 °C avant d'être utilisé dans la réaction catalytique, répondant à la formule suivante :

$$[Rh_aRu_bX_cY_d(OH)_2]^{z+}(A^{n-}_{z/n}).mH_2O$$

dans laquelle :

X représente un cation métallique monovalent ou bivalent,
Y représente un cation métallique trivalent ou tétravalent,
$0 \le a \le 0,5$, $0 \le b \le 0,5$, $0,5 \le c \le 0,9$,
$0 \le d \le 0,5$, $a+b+c+d = 1$,
m est supérieur ou égal à 0,
A peut représenter un groupe hydroxyle, tout groupe minéral, un anion organique, un iso ou hétéropolyanion, un complexe anionique ou un complexe organométallique, présentant une charge n,
z représente la charge totale du composant cationique.

**19.** Procédé selon la revendication 7, dans lequel le lit catalytique est rempli avec un catalyseur présentant un diamètre moyen croissant de particules le long de la direction de propagation des gaz.

# Fig.1

# Fig.2